# EUROPEAN PATENT APPLICATION

(11) **EP 1 271 945 A2**
(43) Date of publication of application: **02.01.2003**
(21) Application number: 02253749.2
(22) Date of filing: 29.05.2002
(51) Int. Cl.: H04N 5/775

(54) **Video signal generating apparatus**

(30) Priority: 21.06.2001 KR 2001035323
(71) Applicant: SAMSUNG ELECTRONICS CO., LTD., Suwon-City, Kyungki-do (KR)
(72) Inventor: Han, Hong-gyu, Suwon-city, Kyungki-do (KR)
(74) Representative: Geary, Stuart Lloyd

(57) **Abstract**

A combination system and a method for outputting an identification signal for the type of a reproduced image signal. The combination system has a DVDP (100) for reproducing data recorded on a DVD, and a VCR (300) for reproducing data recorded on a magnetic tape. Moreover, the combination system includes an output mode transmission unit (500) for judging whether an image signal is output from the DVDP (100) or from the VCR (300), and transmitting a judged information to an external apparatus, and a control unit for controlling the transmitting operation of the output mode transmission unit in accordance with the type of the image signal output to the image display apparatus.

## Description

The present invention relates to a video signal generating apparatus including means for selectively generating video signals according to a plurality of protocols and a multipole output connector having terminals for outputting signals according to each of said protocols.

A system in which two different apparatuses are connected to form one integrated system has be called a "combination system", a "combo-system" or simply "a combo" for short. One example of a combo-system is a DVDP/VCR combo-system developed to comprehensibly perform the functions of a DVDP (a digital video disc player) and a VCR (video cassette recorder).

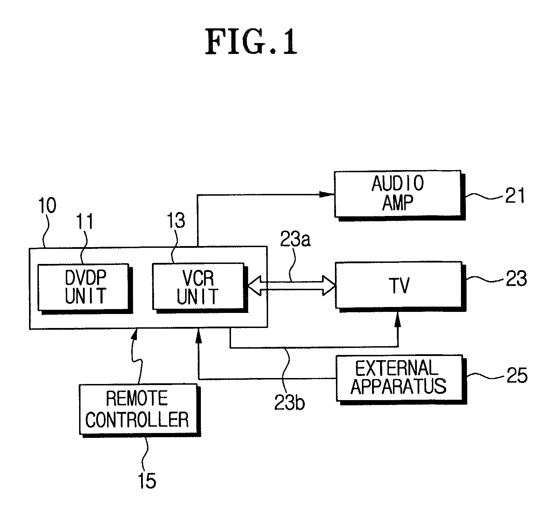

Figure 1 is a view schematically showing a DVDP/VCR combo-system and peripheral apparatuses connected to the DVDP/VCR combo-system. The DVDP/VCR combo-system 10 has a DVDP unit 11 having the general functions of a DVD player, including reproducing image data and audio data recorded on an optical recording medium such as a DVD (digital video disc), and a VCR unit 13 having the general functions of a VCR including recording a received signal on a magnetic tape and reproducing image data and audio data recorded on the magnetic tape. The DVDP/VCR combo-system 10 has the advantages of not only having independently the functions of the DVDP unit 11 and the VCR unit 13 but also performing recording of image and audio signals reproduced by the DVDP unit 11 on the magnetic tape by the VCR unit 13.

The DVDP unit 11 and the VCR unit 13 in the DVDP/VCR combo-system 10 are built as one system. Therefore, a user can perform mode shifts between the DVDP unit 11 and the VCR unit 13, and the individual functions of each apparatus 11, 13 by manipulating a separate input device such as a remote controller 15 or a control panel (not shown) disposed at the front of the DVDP/VCR combo-system 10.

A TV set can be connected to the DVDP/VCR combo-system for displaying images therefrom and outputting audio signals therefrom. An audio amplifier 21 may be used to output audio signals from the DVDP unit 11 of the DVDP/VCR combo-system 10. Furthermore, an external apparatus, such as a camcorder, can be connected to the DVDP/VCR combo-system 10. The DVDP/VCR combo-system 10 can receive an image signal and an audio signal from the external apparatus 25 and record them on a magnetic tape inserted in the VCR unit 11. The images and audio thus recorded can be output to an image output apparatus such as the TV set 23.

A European style DVDP/VCR combo-system 10 and European style TV set 23 use the PAL standard and can be connected by a SCART cable. The plugs of SCART leads have 21 pins. They can also be connected by a super jack 23b composed of 7 pins, and a RF jack (not shown). The SCART cable can be used to carry image signals and the audio signal reproduced by the DVDP unit 11 and the VCR unit 13.

The DVDP unit 11 is constructed to output three types of image signals. The three signals are: a RGB signal made from a R (red) signal, a G (green) signal, and a B (blue) signal; a super signal composed of a luminance signal (Y) and a color signal (C) in which two chrominance signals (P_{R-y} and P_{B-Y}) are combined; and a composite signal composed of a sum (Y+C) of the luminance signal and the color signal. Among these signals, the composite signal is not used because the picture quality is not good compared to a component signal or the super signal. Therefore, among the signals reproduced from the DVDP unit 11, the RGB signal is preferably transmitted to the TV set 23 through the SCART lead, and the super signal is transmitted to the TV set 23 through the super jack 23b.

When an image signal reproduced from the VCR unit 13 is transmitted to the TV set 23 as a composite signal, the image signal is transmitted through the SCART lead just as the RGB signal reproduced from the DVP unit 11. Since RGB signals and the composite signals produced by the DVDP/VCR combo-system 10 are transmitted through one SCART lead and the type of the input signal is not recognized in the TV set 23, there is a difficult in displaying the input image signal.

Moreover, even though the RGB signal input into the TV set 23 through the SCART lead can be reproduced, the picture quality of the image signal may be poorer than that of the actual image signal reproduced in accordance with the RGB signal in terms of resolution and distinction. To solve the problem of the displaying operation of the TV set 23 according to the input signal, the display according to the input image signal of the TV set 23 must be set up manually. Therefore, the display must be reset up whenever the type of the signals input into the TV set 23 changes, and this is inconvenient for users.

An apparatus according to the present invention is characterised by means for producing a protocol indicating signal indicative of the currently selected video signal protocol and said connector, preferably a SCART socket, including a terminal for outputting said protocol indicating signal.

The present invention may be employed advantageously in a combined DVD player and VCR apparatus, in which case said protocols are preferably RGB and composite video. Preferably, an RGB signal is output during DVD reproduction and a composite video signal is output during video tape reproduction.

According to the present invention, there is also provided a video display system comprising an apparatus according to the present invention, and a video display connected to said connector for receiving video signals and said protocol indicating signal, wherein the video display processes video signals from said apparatus in dependence on the protocol indicating signal received therewith.

Additional optional and preferred features can be found in the claims appended hereto.

Embodiments of the present invention will now be described, by way of example, with reference to the accompanying drawings, in which:
Figure 1 is a block diagram schematically showing a DVDP/VCR combo-system and peripheral devices connected to the DVDP/VCR combo-system;
Figure 2 is a block diagram showing a combination system for outputting an identification signal in regard to a reproduced image signal according to the present invention;
Figure 3 is a view showing a SCART output terminal as one example of an output mode transmitter of Figure 2;
Figure 4 is a flowchart showing a preferred embodiment of a method for controlling an output operation of the image signal reproduced by using a combination system of the present invention; and
Figure 5 is a flow chart showing another preferred embodiment of a method for controlling an output operation of image signal reproduced by using a combination system of the present invention.

Referring to Figure 1, the combination system includes a DVDP unit 100 for reproducing data recorded on a DVD and a VCR unit 300 for recording video signals on a magnetic tape and reproducing the recorded video signals. In the present example, the PAL standard, rather than NTSC or SECAM, is employed.

The DVDP unit 100 has a DVD deck 170, a DVD servo 150, a MPEG decoder 130, and a DVD microprocessor 110. The DVD deck 170 reads data recorded on DVDs to reproduce the recorded video signal. The DVD servo 150 controls the position and the speed of the DVD deck 170. The MPEG decoder 130 receives signals reproduced by the DVD deck 170, and decodes the transmitted signals into an image signal and an audio signal. The image signal and the audio signal output from the MPEG decoder 130 are output to a selection unit 40 and a super output terminal 70. The DVD microprocessor 150 controls the general operation of the MPEG decoder 130, the DVD servo 150, the DVD deck 170, and the DVDP unit 100 in accordance with a control signal input from the outside. As described above, the DVDP/VCR combo-system uses the PAL (Phase Alternation by Line) standard, which is the television broadcasting standard used in most European countries, China, and Australia. The image signal reproduced in the DVDP unit 110 with the PAL standard is a super signal and a RGB signal, in which R (red), G (green), and B (blue) are respectively separated.

The VCR unit 300 has a VCR deck 330, a video conversion unit 350, an audio conversion unit 370, and a VCR microprocessor 310. The VCR deck 330 records image signals and audio signals on magnetic tape and reproduces image signals and audio signals recorded on magnetic tape. The video conversion unit 350 and the audio conversion unit 370 convert the image signal and the audio signal that will be recorded into a format for recording through the VCR deck 330, and convert the image signal and the audio signal reproduced from the VCR deck 330 into a format recognizable in an external apparatus connected to the output terminal 70. The VCR microprocessor 310 controls the general operation of the VCR deck 330, the video conversion unit 350, the audio conversion unit 370, and a menu storage unit 400. The VCR microprocessor 310 operates to switch a signal input into a corresponding terminal, from among the output terminals 70, for output. Moreover, the VCR microprocessor 310 controls the DVD microprocessor 110 for controlling the general operations of the DVDP unit 100. The image signal reproduced from the VCR unit 300 is a composite signal.

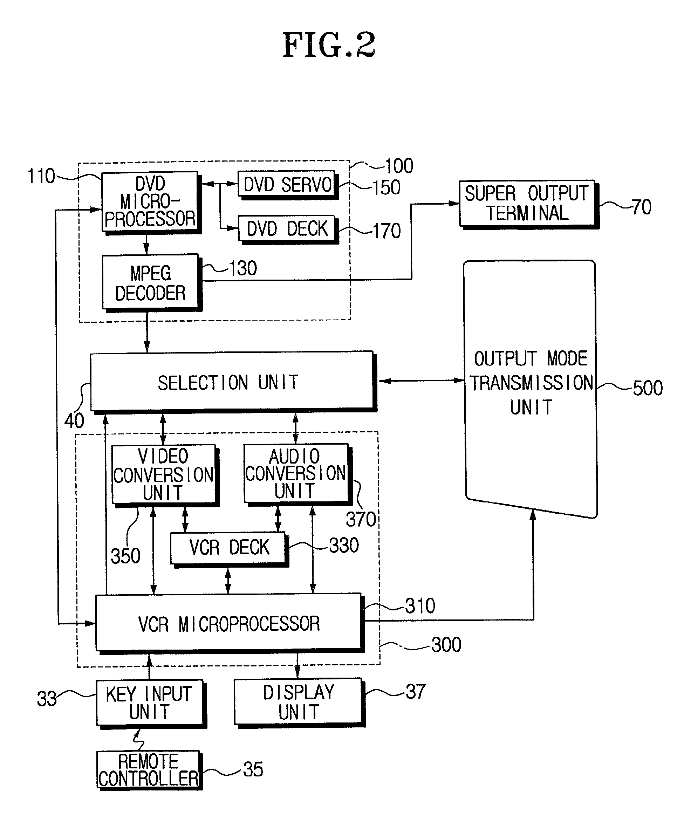

The DVDP/VCR combo-system of Figure 2 comprises: a key input unit 33 for the input of various commands by a user; a display unit 37 for displaying the operational status, including, for example, the mode set-up, of the DVDP/VCR combo-system so that the user is informed about its operational status; and a remote controller sensor (not shown) for receiving commands wirelessly from a remote controller 35 operated by a user.

The DVDP/VCR combo-system has a super output terminal 70 for outputting image signals and audio signals reproduced by the DVDP unit 100 and the VCR unit 330, and an output mode transmitter 500. The super output terminal 70 outputs the image signals output by the MPEG decoder 130 of the DVDP unit 100. The output mode transmission unit 500 outputs the image signals and the audio signals output by the selection unit 40 and reproduced by the DVDP unit 110 and the VCR unit 330. In addition, the output mode transmission unit 500 allows the VCR unit 330 to record signals received by the selection unit 40.

The VCR microprocessor 310 controls the output signal of the selection unit 40, thus the VCR microprocessor 310 has signal identification information for identifying whether the signal output from the selection unit 40 is an RGB signal, which has been reproduced by the DVDP unit 110, or a composite signal, which has been reproduced by the VCR unit 300. The signal output from the selection unit 40 is output to the image display apparatus through the output mode transmission unit 500. At this time, the VCR microprocessor 310 outputs the signal identification information corresponding to each signal through the output mode transmission unit 500, regardless of the information on the identified output signal. Accordingly, the image display apparatus connected with the output mode transmission unit 500 can recognize the type of the image signal input from the output mode transmission unit 500 using the signal identification information, and performs processing corresponding to the input signal based on the identified information.

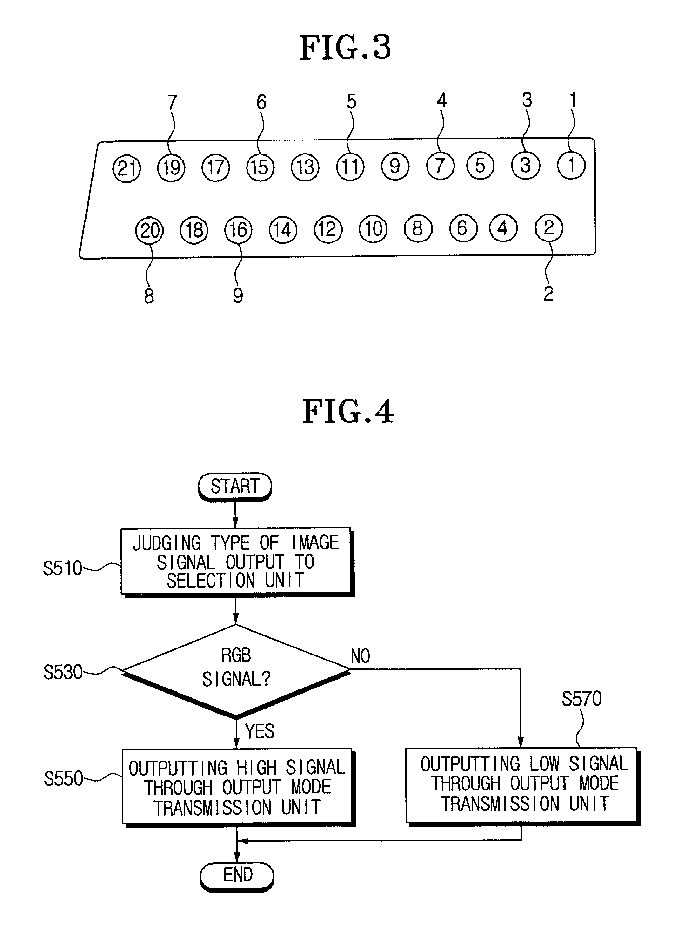

Referring to Figure 3, the SCART output terminal is composed of 21 pins, and carries control, image and a audio signals. Pin '2' 2 is used for audio signal input and pin '20' 8 is used for image signal input. Pin '1' 1 and Pin '3' 3 are used for audio signal output. Pin '15' 6, a pin '11' 5 and pin '7' 4 are used for the output of the red, green and blue components respectively of RGB signals produced by the DVDP unit 100. Pin '19' 7 and pin '15' 6 are used respectively for the luminance and chrominance components of composite video signals produced by the VCR unit 300.

In the preferred embodiment of the present invention, the signal judgement information, which is used to determine whether a signal being output through the SCART output terminal is an RGB signal produced by the DVDP unit 100 or a composite signal produced by the VCR unit 300, is output through pin '16' 9. The signal judgement information output through pin '16' 9 has different electrical levels in accordance with the type of signal being output. When the signal output through the SCART output terminal is an RGB signal, the VCR microprocessor 310 outputs the signal at +5 volts at pin '16' 9 and when the signal output through the SCART output terminal is a composite signal, the VCR microprocessor 310 outputs a signal at 0 volts through the pin '16' 9. Therefore, the image display apparatus connected with the SCART output terminal can identify whether the input signal is an RGB signal or a composite signal. The image display apparatus operates according to the signal judgement information so as to use the correct display mode for the received video signal.

On the other hand, the DVDP/VCR combo-system can set up an output operation for an input signal of the selection unit 40 through OSD (on screen display) for setting up in regard to its operation. If the selection unit 40 is selected to output an RGB signal input into the DVDP unit 100 from the signal input into the DVDP unit 100 and the VCR unit 300, then the set-up information is maintained regardless of the on/off of the power. Therefore, although the DVD is played in the status of turning the power on after being turned off, the selection unit 40 is set up to output the RGB signal. At this time, the VCR microprocessor 310 outputs a 5V signal through the output mode transmission unit 500. The VCR microprocessor 310 outputs a 0V through the output mode transmission unit 500 for receiving a broadcasting signal and operation of the VCR unit 300.

Referring to Figure 4, first of all, the VCR microprocessor 310 determines the type of the image signal output through the selection unit 40 (S510). The image signal output through the selection unit 40 can be a DVD reproduction signal, a magnetic tape reproduction signal, a broadcasting signal received by a tuner or a signal input from an external apparatus. In this case, the image signal is an RGB signal from the DVD unit 100. If the signal is determined to be an RGB signal (S530), the VCR microprocessor 310 outputs 5V through the output mode transmitter 500 (S550). On the other hand, if the signal is determined not to be an RGB signal, the VCR microprocessor 310 outputs 0V through the output mode transmission unit 500.

The image display apparatus alters its operation in dependence on the level (5V or 0V) of the signal output through the output mode transmission unit 500 to correctly display the received image signal.

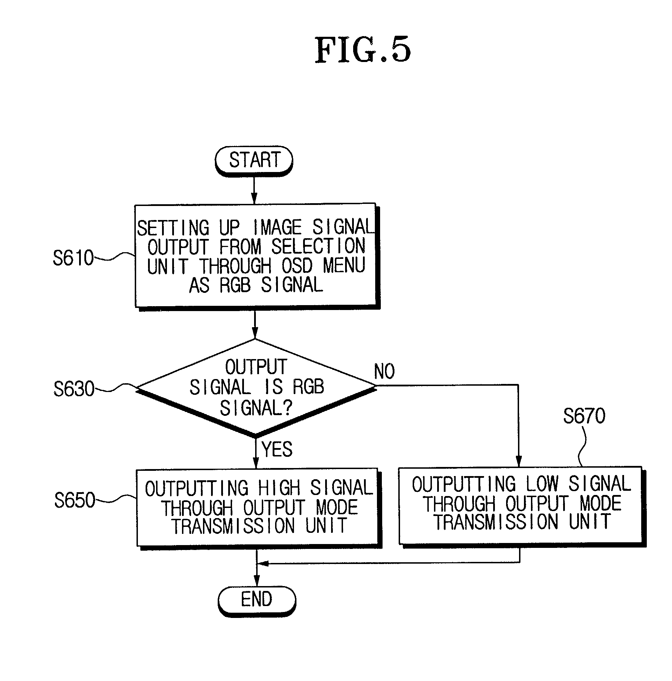

Referring to Figure 5, which relates to another embodiment, the image signal output from the selection unit 40 is set up using an OSD menu (S610). If the signal output from the selection unit 40 is set up as an RGB signal, the VCR microprocessor 300 determines that the signal output from the selection unit 40 is an RGB signal. The image signal output from the selection unit 40 is set up and stored in step 610 and the VCR microprocessor 310 determines whether the selection unit 40 is outputting an RGB signal or not. If it is determined that the RGB signal is being output at step 630, the VCR microprocessor 310 outputs the 5V through the output mode transmission unit 500 (S650). If it is determined that the output is not an RGB signal in step 630, the VCR microprocessor 310 outputs 0V through the output mode transmission unit 500. The set-up and the operation of the VCR microprocessor 310 in accordance with the set-up are constantly maintained regardless of the switching of the power on and off unless the set-up is changed. Therefore, when playing the DVD, the output signal of the selection unit 40 is set up as the RGB signal, and the VCR microprocessor 310 outputs 5V through the pin '16' of the SCART output terminal, which is the output mode transmission unit 500. Accordingly, the image display apparatus connected with the SCART output terminal determines that the input image signal is an RGB signal in accordance with the 5V signal, and operates to display the RGB signal.

The type of the image signal output from a DVDP/VCR combo-system is indicated by a voltage output via the output mode transmission unit 500, i.e. a SCART socket, and thus the external apparatus can identify the type of the input image signal through the level of the indicating signal received through the SCART socket. Since the type of the output image signal reproduced from the DVDP unit 100 and the VCR unit 300 is communicated to the image display apparatus, such as a TV set, the most suitable display method is performed.

A display apparatus includes a SCART socket for receiving video signals and a video mode identifying signal from the a DVDP/VCR combo-system. The display apparatus includes processing circuitry for processing video signals to control a display screen, such as an LCD or a CRT. The processing circuitry, which includes a microprocessor, is responsive to the received video mode identifying signal to process the received video signal in the correct manner for display on the display screen.

## Claims

1. A video signal generating apparatus including means (100, 300) for selectively generating video signals according to a plurality of protocols and a multipole output connector (500) having terminals (1, ..., 8) for outputting signals according to each of said protocols, **characterised by** means (310) for producing a protocol indicating signal indicative of the currently selected video signal protocol and said connector (500) including a terminal (9) for outputting said protocol indicating signal.

2. An apparatus according to claim 1, wherein the connector (500) comprises a SCART socket.

3. A combined DVD player and VCR apparatus according to claim 1 or 2, wherein said protocols are RGB and composite video.

4. An apparatus according to claim 3, wherein an RGB signal is output during DVD reproduction and a composite video signal is output during video tape reproduction.

5. A video display system comprising an apparatus according to any one of claims 1 to 4, and a video display connected to said connector for receiving video signals and said protocol indicating signal, wherein the video display processes video signals from said apparatus in dependence on the protocol indicating signal received therewith.

6. A combination system having a DVDP for reproducing data recorded on a DVD, and a VCR for reproducing data recorded on a magnetic tape, comprising:
an output mode transmission unit for transmitting information corresponding to whether an image signal is output from the DVDP or from the VCR to an external image display apparatus; and
a control unit for controlling the transmitting operation of the output mode transmission unit in accordance with the type of the image signal output to the image display apparatus.

7. The combination system of claim 6, wherein the image signal output from the DVD is a RGB signal, and
the image signal output from the VCR is a composite signal.

8. A method for controlling an output operation an image signal using a combination system having a DVDP for reproducing data recorded on a DVD, and a VCR for reproducing data recorded on a magnetic tape, comprising the steps of:
judging whether an image signal is output from the DVDP or from the VCR; and
transmitting a detection signal corresponding to a judgment of the image signal to an image display apparatus for displaying the image signal.

9. The method for controlling an output operation of an image signal of the combination system of claim 8, wherein
the image signal output from the DVD is a RGB signal, and
the image signal output from the VCR is a composite signal.

10. A method for controlling an output operation of an image signal of a combination system having a DVDP for outputting a RGB signal, a VCR for outputting a composite signal, and a selection unit for selectively outputting the RGB signal and the composite signal, comprising the steps of:
setting up a type of an output signal output from the selection unit as the RGB signal by using an OSD menu;
judging whether the image signal is the RGB signal or the composite signal, when the image signal is output through the selection unit in the status that the image signal output from the selection unit is set up as the RGB signal; and
outputting a high signal to an image display apparatus for displaying the image signal, when the image signal output through the selection unit is the RGB signal, and outputting a low signal to the image display apparatus, when the image signal output through the selection unit is not the RGB signal.
